Europäisches Patentamt

European Patent Office

Office européen des brevets

(11) Veröffentlichungsnummer: **0 296 373**
**A1**

# EUROPÄISCHE PATENTANMELDUNG

(21) Anmeldenummer: 88108478.4

(22) Anmeldetag: 27.05.88

(51) Int. Cl.⁴: **B23B 29/00**

(30) Priorität: 26.06.87 DE 3721158

(43) Veröffentlichungstag der Anmeldung:
28.12.88 Patentblatt 88/52

(84) Benannte Vertragsstaaten:
CH FR GB IT LI

(71) Anmelder: **Fried. Krupp Gesellschaft mit beschränkter Haftung**
**Altendorfer Strasse 103**
**D-4300 Essen 1(DE)**

(72) Erfinder: **von Haas, Rainer, Dipl.-Ing.**
**Krümmelstrasse 26**
**D-2054 Geesthacht(DE)**

(74) Vertreter: **Vomberg, Friedhelm, Dipl.-Phys.**
**Graf-Recke-Strasse 231**
**D-4000 Düsseldorf 1(DE)**

(54) Werkzeugeinrichtung mit Winkellagefixierung.

(57) Es wird eine rotationssymmetrische Werkzeugeinrichtung bechrieben, die aus Werkzeugkopf (1) und Werkzeughalter (2) mit Anlageflächen (3, 3a) beider Teile senkrecht zur Rotationsachse besteht und mit einem Sicherungsstift (5) in einer Paßbohrung (4) in einem Teil und einer passenden gegenüberliegenden Führungsbohrung (6) im anderen Teil zur Sicherung der Winkellage ausgerüstet ist. Diese Werkzeugeinrichtung ist dadurch ausgezeichnet, daß mehr als drei Bohrungen vorhanden sind, die jeweils paarweise in einem Teil nur als Paßbohrungen (4) und im anderen Teil nur als Führungsbohrungen (6) für den Sicherungsstift (5) ausgeführt sind. Alle Führungsbohrungen bis auf eine sind mit Stopfen (7) verschlossen.

EP 0 296 373 A1

## Werkzeugeinrichtung mit Winkellagefixierung

Die Erfindung bezieht sich auf eine Werkzeugeinrichtung mit Winkellagefixierung und Sicherung der richtigen Winkellage.

Es sind Werkzeugeinrichtungen bekannt, die rotationssymmetrisch ausgebildet sind, aber eine Winkellagefixierung aufweisen. Werkzeugköpfe solcher Systeme können normalerweise rechts und links, d h. um 180° verdreht eingesetzt werden. Bei Linksdrehung der Werkstückspindel kann z.B. ein linker Werkzeugkopf zum Längsdrehen in Richtung Spindelstock eingesetzt werden. Wird der Werkzeugkopf um 180° gedreht auf den Grundhalter aufgesetzt, kann man bei Rechtsdrehung der Spindel in entgegengesetzter Richtung, also in Richtung Reitstock, längsdrehen. Um zu vermeiden, daß der Werkzeugkopf in der falschen Winkellage gespannt wird, wird er z.B. durch einen vorstehenden Stift, der beim Aufschieben des Kopfes in eine Bohrung des Gegenstückes eingreift, so gesichert, daß das vollständige Aufschieben beim Montieren um 180° gedreht nicht möglich ist. Bekannt ist auch die umgekehrte Sicherung, bei der sich der Stift im Werkzeughalter und die Bohrung sich im Werkzeugkopf befindet.

Diese Sicherungsausführungen bedingen aber, daß der Werkzeugkopf nicht mehr universell, d.h. rechts und links unterschiedlich bei verschiedenen Maschinen einsetzbar ist.

Aufgabe der Erfindung ist daher eine Werkzeugeinrichtung mit Winkellagefixierung, die diesen Nachteil vermeidet, und die richtige Werkzeugkopfmontage sicherstellt.

Eine Lösung der Aufgabe ist eine Werkzeugeinrichtung mit den kennzeichnenden Merkmalen des Anspruchs 1.
Entsprechend der Anordnung der Bohrungen kann der Werkzeugkopf in verschiedenen Winkellagen fixiert werden und die richtige Winkellage kann mit dem Sicherungsstift gesichert werden. Die Führungsbohrungen können sich entweder im Werkzeugkopf oder im Werkzeughalter befinden.

Durch geeignete Wahl der freien Führungsbohrungen kann dabei der gleiche Kopf ohne Veränderung des Sicherungsstiftes in unterschiedlichen Winkellagen an verschiedenen Werkzeughaltern montiert werden. Durch Änderung der Lage des Sicherungsstiftes im Werkzeugkopf wird die Winkellage zu allen Haltern verändern.

Nach einer besonderen Ausführungsform der Erfindung sind Werkzeugkopf und Werkzeughalter mit maximal vier Bohrungen ausgerüstet, wobei die Paßbohrungen und Führungsbohrungen jeweils diametral gleich weit von der Symmetrieachse liegen. Bei dieser Anordnung ist der Werkzeugkopf wahlweise links oder wahlweise rechts einsetzbar. Sind vier Bohrungen vorhanden, so ist derselbe Werkzeugkopf ohne Änderung des Sicherungsstiftes in einem Werkzeughalter rechts und in einem zweiten Werkkzeughalter links einzusetzen, dadurch daß die freie Führungsbohrung im Werkzeughalter jeweils eine andere ist. Für die Demontage von Verschlußstopfen ist es dabei besonders vorteilhaft, wenn sie mit Abdrückgewinde ausgerüstet sind.

Die Stifte können in verschiedener Art ausgeführt sein, z.B. als Paßstifte, Kerbstifte, Spannstifte oder Gewindestifte. Mit Ausnahme der Gewindestifte sitzen solche Stifte durch Preßpassung betriebssicher fest. Sie können mehrfach herausgezogen und wieder eingeschlagen werden. Gewindestifte können mit Kunststoff oder Klebstoff gegen selbsttätiges Herauswandern gesichert werden.

Nach einer weiteren Ausgestaltung des Gegenstandes der Erfindung können statt der Stifte und der entsprechenden Bohrungen auch Paßfedern und Scheibenfedern mit entsprechenden Nuten verwendet werden. Die Stopfen sind dann den Abmessungen der Nuten anzupassen.

Bei automatischen Werkzeugeinrichtungen kann die korrekte Montage des Werkzeugkopfes mit Hilfe von Sensoren überwacht werden. Diese Sensoren geben ein Signal, wenn der Abstand der Anlageflächen z.B. kleiner als 0,2 mm oder 0 mm beträgt. Durch dieses Signal wird der Spannvorgang ausgelöst, bzw. bei falscher Montage unterbleibt das Spannen und das Anlaufen der Maschine.

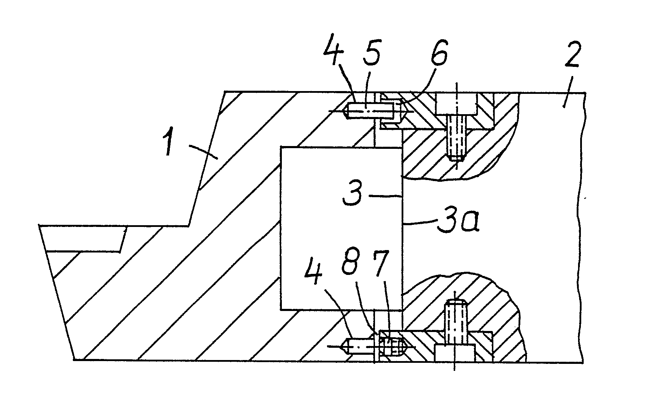

In der Zeichnung ist eine Ausführungsform des Gegenstandes der Erfindung schematisch dargestellt. Sie zeigt

einen Werkzeugkopf mit zwei Paßbohrungen, von denen eine mit einem Stift versehen ist, mit einem Werkzeughalter mit zwei Führungsbohrungen, von denen eine mit einem Stopfen verschlossen ist.

1 ist der Werkzeugkopf, 2 der Werkzeughalter und 3 und 3a die Anlageflächen des Werkzeugkopfes und -halters. Während sich einerseits die Bohrungen direkt im Werkzeugkopf befinden, sind im Werkzeughalter die Nutensteine mit den notwendigen Bohrungen angeschraubt. Diese Nutensteine ragen aus der Anlagefläche heraus und der Werkzeugkopf hat an den entsprechenden Stellen passende Mitnehmernuten. Die Stoßfuge 8 zwischen einer Paßbohrung 4 und einer Führungsbohrung 6 liegt daher nicht in einer Ebene mit den Anlageflächen 3 und 3a des Werkzeugkopfes und -halters.

Der Werkzeugkopf hat zwei Paßbohrungen 4, wobei eine mit mit dem Sicherungsstift 5 besetzt ist, und je eine Führungsbohrung 6 in den angeschraubten Nutenstein im Werkzeughalter 2, von denen eine mit einem Stopfen 7 verschlossen ist.

Ansprüche

1. Rotationssymmetrische Werkzeugeinrichtung mit wechselbarem Werkzeugkopf und Werkzeughalter mit Anlageflächen beider Teile senkrecht zur Rotationsachse und mit einem Sicherungsstift in einer Paßbohrung in einem Teil und einer passenden gegenüberliegenden Führungsbohrung im anderen Teil zur Sicherung der Winkellage, **dadurch gekennzeichnet,** daß mehr als drei Bohrungen vorhanden sind, die jeweils paarweise in einem Teil nur als Paßbohrungen (4) für den Sicherungsstift (5) und im anderen Teil nur als Führungsbohrungen (6) für den Sicherungsstift (5) ausgeführt sind, wobei bei ungerader Anzahl der Bohrungen die letzte Bohrung entweder als Paßbohrung (4) oder als Führungsbohrung (6) ausgeführt ist und alle Führungsbohrungen bis auf eine mit Stopfen (7) verschlossen sind.

2. Werkzeugeinrichtung nach Anspruch 1, dadurch gekennzeichnet, daß maximal vier Bohrungen vorhanden sind, wobei die Paßbohrungen (4) und die Führungsbohrungen (6) jeweils diametral gleich weit von der Symmetrieachse liegen.

3. Rotationssymmetrische Werkzeugeinrichtung nach Anspruch 1, dadurch gekennzeichnet, daß die Stopfen in den Führungsbohrungen mit einem Abdrückgewinde zur Demontage versehen sind.

4. Werkzeugeinrichtung nach den Ansprüchen 1 und 2, dadurch gekennzeichnet, daß sich die Bohrungen in je einem separaten Bauteil (z.B. Nutenstein) am Werkzeugkopf bzw. Werkzeughalter befinden.

5. Werkzeugeinrichtung nach den Ansprüchen 1 bis 4, dadurch gekennzeichnet, daß die Stoßfugen zwischen Führungsbohrungen und Paßbohrungen und die Anlageflächen in verschiedenen Ebenen liegen.

## EINSCHLÄGIGE DOKUMENTE

EP 88108478.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | DE - A1 - 3 007 440 (KRUPP)<br>* Seite 14; Fig. 2 *<br>-- | 1 | B 23 B 29/00 |
| A | EP - A1 - 0 175 902 (GILDEMEISTER)<br>* Seite 11, letzter Absatz - Seite 12, 1. Absatz; Fig. 5,8 *<br>-- | 1 | |
| A | US - A - 3 815 454 (KNOTT)<br>---- | | |

RECHERCHIERTE
SACHGEBIETE (Int. Cl.4)

B 23 B 29/00

B 23 Q 3/00

Der vorliegende Recherchenbericht wurde für alle Patentansprüche erstellt.

| Recherchenort | Abschlußdatum der Recherche | Prüfer |
|---|---|---|
| WIEN | 03-08-1988 | LEBZELTERN |